(19) Europäisches Patentamt / European Patent Office / Office européen des brevets

(11) **EP 3 978 301 B1**

(12) **EUROPEAN PATENT SPECIFICATION**

(45) Date of publication and mention
of the grant of the patent:
**01.05.2024 Bulletin 2024/18**

(21) Application number: **20814531.8**

(22) Date of filing: **25.05.2020**

(51) International Patent Classification (IPC):
**B60L 15/20** (2006.01)    **B60L 15/38** (2006.01)
**B60W 30/18** (2012.01)    **B60W 30/184** (2012.01)

(52) Cooperative Patent Classification (CPC):
**B60L 15/20; B60L 15/2045;** B60L 2220/42;
B60L 2240/423; B60L 2240/425; Y02T 10/64;
Y02T 10/72

(86) International application number:
**PCT/CN2020/092098**

(87) International publication number:
**WO 2020/238849 (03.12.2020 Gazette 2020/49)**

(54) **POWER ALLOCATION METHOD OF BIELECTRIC SYSTEM AND VEHICLE**

LEISTUNGSZUORDNUNGSVERFAHREN FÜR EIN BIELEKTRISCHES SYSTEM UND FAHRZEUG

PROCÉDÉ D'ATTRIBUTION DE PUISSANCE DE SYSTÈME BIÉLECTRIQUE ET VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.05.2019 CN 201910444624**

(43) Date of publication of application:
**06.04.2022 Bulletin 2022/14**

(73) Proprietor: **Yutong Bus Co., Ltd.
Zhengzhou, Henan 450061 (CN)**

(72) Inventors:
• **ZHAO, Ning**
  **Zhengzhou, Henan 450061 (CN)**
• **LIU, Chaofan**
  **Zhengzhou, Henan 450061 (CN)**
• **YAN, Beizhan**
  **Zhengzhou, Henan 450061 (CN)**
• **ZHANG, Xiaowei**
  **Zhengzhou, Henan 450061 (CN)**
• **WANG, Jifu**
  **Zhengzhou, Henan 450061 (CN)**
• **ZHANG, Tianqi**
  **Zhengzhou, Henan 450061 (CN)**
• **LI, Shuyu**
  **Zhengzhou, Henan 450061 (CN)**

(74) Representative: **Gulde & Partner
Patent- und Rechtsanwaltskanzlei mbB
Wallstraße 58/59
10179 Berlin (DE)**

(56) References cited:
EP-A1- 2 080 660    EP-A1- 2 752 343
EP-A2- 2 444 273    CN-A- 104 319 969
CN-A- 108 569 168    US-A1- 2015 191 167
US-A1- 2018 162 379

**Description**

TECHNICAL FIELD

The present invention relates to a power allocation method of a bi-electric system and a vehicle.

BACKGROUND

At present, electric vehicles mostly adopt a drive mode of dual motors + planetary gear set + main reducer, to split the required high-power motor into two lower-power motors, thereby meeting demands with lower power system costs. This also prevents the use of a motor with extreme power from causing various problems such as high manufacturing cost of vehicles, poor vehicle reliability, and bulky size that affects the vehicle layout.

A permanent magnet synchronous motor has advantages of large starting torque and high energy conversion rate, so that new energy vehicles mostly use the permanent magnet synchronous motor as a drive motor. The permanent magnet synchronous motor mostly adopts a closed structure, and is prone to generate a lot of heat during operation. Extremely high temperatures may cause irreversible demagnetization of permanent magnets, and accelerate the aging of the insulating materials inside the motor, thus reducing the performance and service life of the motor. The rated power of a power system with dual motors and planetary gear set can meet the most basic use needs of users. However, in some special conditions such as large slopes, full-throttle acceleration, and etc., peak power is required to meet the use needs, but the output of the peak power may cause the temperature of the motor to increase too quickly, which impacts the motor to some extent.

In view of this, the Chinese patent with the publication No. CN104859486B discloses a torque distribution method, system for a dual-motor electric vehicle and a vehicle, to distribute the required torque to a first drive motor and a second drive motor according to multiple distribution proportions, calculate corresponding motor efficiency sums, and control output torques of the first drive motor and the second drive motor at a distribution proportion corresponding to the largest motor efficiency sum. However, when the required power of the vehicle is high, especially when the required power exceeds the sum of rated powers of the two motors, the vehicle requires relatively high dynamic quality. Obviously, the foregoing torque distribution method can only provide a better economy, but cannot meet the requirements for the dynamic quality. Therefore, the torque distribution method has limited applicability, and cannot provide effective power or make a proper distribution to meet the needs of drivers when the vehicle requires high power.

Conventional power allocation methods for bi-electric systems and vehicles using the same are disclosed in EP 2 080 660 A1, EP 2 444 273 A2 CN 108569168 A and US 2018/162379 A1.

SUMMARY

The present invention is intended to provide a power allocation method of a bi-electric system and a vehicle, to solve a problem of poor dynamic quality caused by improper power allocation of an existing dual-motor drive system when the vehicle requires high power.

The invention is defined by the appended set of claims. The description that follows is subjected to this limitation. Any disclosure lying outside the scope of said claims is only intended for illustrative as well as comparative purposes.

To achieve the foregoing objective, the present invention provides a power allocation method of a bi-electric system.

The beneficial effect is as follows: when the required power of the vehicle is high, the current temperature and temperature rise rate are introduced to determine the temperatures of the two motors at subsequent moments. To make the temperatures of the two motors the same, one correction factor is matched to each motor, and the output powers of the two motors are determined based on the correction factors and the initially allocated powers. This not only ensures that the temperatures of the two motors are equal at the subsequent moments, but also ensures the dynamic quality of the vehicle by preventing a dynamic quality decline of the vehicle caused by overheating ahead of time in one of the motors, thereby ensuring the dynamic balance of the two motors under extreme conditions. This power allocation manner is more reasonable, and can ensure safety while meeting driving needs.

Further, to accurately calculate the heat exchange quantity of the motor in the current cooling system, a formula for calculating a heat exchange quantity $Q_e$ of a cooling system of any motor in the current state is:

$$Q_e = \left( Q_{q2} - Q_{q1} \right) * q_q * \rho * c$$

where $Q_{q1}$ is a temperature at a cooling water inlet of the motor, $Q_{q2}$ is a temperature at a cooling water outlet of the motor, $q_q$ is flux of a coolant flowing through the motor per unit sampling time, $\rho$ is density of the coolant, and $C$ is a specific heat capacity of the coolant.

Further, to obtain a better power allocation effect, the initially allocated power of the first motor is:

$$P_{qr} + \frac{\left(P_{qp} - P_{qr}\right) * \left(P_r - P_{qr} - P_{zr}\right)}{\left(P_{qp} + P_{zp}\right) - \left(P_{qr} + P_{zr}\right)}$$

the initially allocated power of the second motor is:

$$P_{zr} + \frac{\left(P_{zp} - P_{zr}\right) * \left(P_r - P_{qr} - P_{zr}\right)}{\left(P_{qp} + P_{zp}\right) - \left(P_{qr} + P_{zr}\right)}$$

where $P_{qr}$ is a rated power of the first motor, $P_{zr}$ is a rated power of the second motor, $P_{qp}$ is a peak power of the first motor, $P_{zp}$ is a peak power of the second motor, and $P_r$ is a required power of the vehicle.

Further, to obtain the heat quantity of any motor easily and accurately, a current of the motor at this moment is inversely deduced from P=UI, then heat resulting from copper loss of the motor is deduced from Q=I²RT, and the heat quantity of the motor is inversely deduced from a proportion of the heat resulting from copper loss to the heat quantity of the motor.

Further, to make a motor power allocation control condition more reasonable, the required power of the vehicle is greater than the sum of the rated power of the first motor and the rated power of the second motor.

The present invention provides a vehicle, including a vehicle body, a memory and a processor that are provided in the vehicle body, and a computer program stored in the memory and running in the processor.

The beneficial effect is as follows: when the required power of the vehicle is high, the current temperature and temperature rise rate are introduced to determine the temperatures of the two motors at subsequent moments. To make the temperatures of the two motors the same, one correction factor is matched to each motor, and the output powers of the two motors are determined based on the correction factors and the initially allocated powers. This not only ensures that the temperatures of the two motors are equal at the subsequent moments, but also ensures the dynamic quality of the vehicle by preventing a dynamic quality decline of the vehicle caused by overheating ahead of time in one of the motors, thereby ensuring the dynamic balance of the two motors under extreme conditions. This power allocation manner is more reasonable, and can ensure safety while meeting driving needs.

Further, to accurately calculate the heat exchange quantity of the motor in the current cooling system, a formula for calculating a heat exchange quantity $Q_e$ of a cooling system of any motor in the vehicle in the current state is:

$$Q_e = \left(Q_{q2} - Q_{q1}\right) * q_q * \rho * c$$

where $Q_{q1}$ is a temperature at a cooling water inlet of the motor, $Q_{q2}$ is a temperature at a cooling water outlet of the motor, $q_q$ is flux of a coolant flowing through the motor per unit sampling time, $\rho$ is density of the coolant, and $C$ is a specific heat capacity of the coolant.

Further, to obtain a better power allocation effect, the initially allocated power of the first motor in the vehicle is:

$$P_{qr} + \frac{\left(P_{qp} - P_{qr}\right) * \left(P_r - P_{qr} - P_{zr}\right)}{\left(P_{qp} + P_{zp}\right) - \left(P_{qr} + P_{zr}\right)}$$

the initially allocated power of the second motor is:

$$P_{zr} + \frac{\left(P_{zp} - P_{zr}\right) * \left(P_r - P_{qr} - P_{zr}\right)}{\left(P_{qp} + P_{zp}\right) - \left(P_{qr} + P_{zr}\right)}$$

where $P_{qr}$ is a rated power of the first motor, $P_{zr}$ is a rated power of the second motor, $P_{qp}$ is a peak power of the first motor, $P_{zp}$ is a peak power of the second motor, and $P_r$ is a required power of the vehicle.

Further, to obtain the heat quantity of any motor in the vehicle easily and accurately, a current of the motor at this moment is inversely deduced from P=UI, then heat resulting from copper loss of the motor is deduced from Q=I²RT, and the heat quantity of the motor is inversely deduced from a proportion of the heat resulting from copper loss to the heat quantity of the motor.

Further, to make a motor power allocation control condition more reasonable, the required power of the vehicle is greater than the sum of the rated power of the first motor and the rated power of the second motor in the vehicle.

BRIEF DESCRIPTION OF THE DRAWINGS

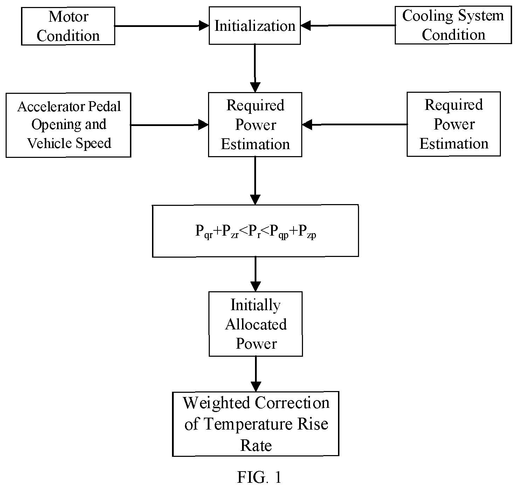

FIG. 1 is a schematic flowchart of a power allocation method of a bi-electric system according to the present invention.

DETAILED DESCRIPTION OF THE EMBODIMENTS

The present invention is described in detail below with reference to the accompanying drawings.

Method embodiment:

The present invention provides a power allocation method of a bi-electric system. The following steps are performed when a required power of a vehicle is high and two motors of the vehicle are both running.

(1) Allocate an initially allocated power to a first motor and a second motor, wherein the initially allocated power of the first motor is $P_1$, and the initially allocated power of the second motor is $P_2$.

To obtain a better power allocation effect, the initially allocated power of the first motor is:

$$P_{qr} + \frac{\left(P_{qp} - P_{qr}\right) * \left(P_r - P_{qr} - P_{zr}\right)}{\left(P_{qp} + P_{zp}\right) - \left(P_{qr} + P_{zr}\right)}$$

the initially allocated power of the second motor is:

$$P_{zr} + \frac{\left(P_{zp} - P_{zr}\right) * \left(P_r - P_{qr} - P_{zr}\right)}{\left(P_{qp} + P_{zp}\right) - \left(P_{qr} + P_{zr}\right)}$$

where $P_{qr}$ is a rated power of the first motor, $P_{zr}$ is a rated power of the second motor, $P_{qp}$ is a peak power of the first motor, $P_{zp}$ is a peak power of the second motor, and $P_r$ is a required power of the vehicle.

In addition, in another implementation, the initially allocated powers of the first motor and the second motor may be fixed values determined according to the actual vehicle; or may be values determined according to other existing measures.

(2) Calculate a heat quantity of the first motor and the second motor based on the initially allocated power of corresponding motors, collecting a heat exchange quantity of a cooling system of the first motor and the second motor in a current state, and the heat quantity of the first motor and the second motor respectively minus the heat exchange quantity of the cooling system of corresponding motors to obtain an absolute temperature rise heat quantity of corresponding motors.

To obtain the heat quantity of any motor, a current of the motor at this moment is inversely deduced from P=UI, then heat resulting from copper loss of the motor is deduced from Q=I²RT, and the heat quantity of the motor is inversely deduced from a proportion of the heat resulting from copper loss to the heat quantity of the motor. In this case, the current of the first motor is $I_q$ and the current of the second motor is $I_z$; and the heat resulting from copper loss of the first motor and the second motor can be deduced from Q=I²RT. The heat resulting from the copper loss accounts for about 45% of the total heat quantity, and then total heat quantities $Q_{mq}$ and $Q_{mz}$ of the motors can be inversely deduced. In another implementation, the total heat quantity of the motor may also be obtained according to other existing measures, for example, by using a calibration relationship between an operating power of the motor and the heat quantity.

The formula for calculating the heat exchange quantity $Q_e$ of the cooling system of any motor in the current state is:

$$Q_e = \left(Q_{q2} - Q_{q1}\right) * q_q * \rho * c$$

where $Q_{q1}$ is a temperature at a cooling water inlet of the motor, $Q_{q2}$ is a temperature at a cooling water outlet of the motor, $q_q$ is flux of a coolant flowing through the motor per unit sampling time, $\rho$ is density of the coolant, and $C$ is a specific heat capacity of the coolant. In another implementation, if the cooling system of the motor adopts air cooling or other cooling methods, the heat exchange quantity may be calculated according to other existing formulas.

If the heat exchange quantity of the first motor is $Q_{eq}$ and the heat exchange quantity of the second motor is $Q_{ez}$, the absolute temperature rise heat quantity of the first motor is $Q_q=Q_{mq}-Q_{eq}$, and the absolute temperature rise heat quantity of the second motor is $Q_z=Q_{mz}-Qez$.

(3) Obtain a temperature rise rate of the first motor and the second motor based on the absolute temperature rise heat quantity of corresponding motors and corresponding motor characteristics.

The temperature rise rate of the motor may be looked up in its calibration table, where the table is defined according to the factory-set characteristics of the motor, and can be directly used in the present invention, that is, $Q_q$ corresponds to $k_{dq}$ and $Q_z$ corresponds to $k_{dz}$.

(4) Obtain a current temperature of the first motor $T_1$ and a current temperature of the second motor $T_2$, and determine an output power of the first motor and an output power of the second motor according to the following two relationships:

a first relationship: a temperature of the first motor at a next moment and a temperature of the second motor at the next moment are adjusted to be equal based on the current temperature of the first motor, $T_1$ and the current temperature of the second motor, $T_2$ in combination with a temperature rise rate of the first motor, $k_{dq}$, a temperature rise rate of the second motor, $k_{dz}$, a correction factor of the first motor, $\alpha_1$ and a correction factor of the second motor, $\alpha_2$,

$$T_1 + \alpha_1 \int_{t_1}^{t_2} k_{dq}dt = T_2 + \alpha_2 \int_{t_1}^{t_2} k_{dz}dt$$

where $t_1$ and $t_2$ represent sampling time; and
a second relationship: a sum of the output power of the first motor and the output power of the second motor is equal to a required power of a vehicle, $P_r$, wherein the output power of the first motor is the correction factor of the first motor, $\alpha_1$ multiplied by the initially allocated power of the first motor, $P_1$, and the output power of the second motor is the correction factor of the second motor, $\alpha_2$ multiplied by the initially allocated power of the second motor, $P_2$,

$$P_1 * \alpha_1 + P_2 * \alpha_2 = P_r.$$

The first relationship and the second relationship in step (4) are transformed into formulas:

$$P_1 * \alpha_1 + P_2 * \alpha_2 = P_r$$

$$T_1 + \alpha_1 \int_{t_1}^{t_2} k_{dq}dt = T_2 + \alpha_2 \int_{t_1}^{t_2} k_{dz}dt$$

where $\alpha_1$ is the correction factor of the first motor, $\alpha_2$ is the correction factor of the second motor, $T_1$ is the current temperature of the first motor, $T_2$ is the current temperature of the second motor, $k_{dq}$ is the temperature rise rate of the first motor, $k_{dz}$ is the temperature rise rate of the second motor, and $P_r$ is the required power of the vehicle, where $t_1$ and $t_2$ represent sampling time.

The first relationship not only can be transformed into the formula $T_1 + \alpha_1 \int_{t_1}^{t_2} k_{dq} dt = T_2 + \alpha_2 \int_{t_1}^{t_2} k_{dz} dt$ , but also can be transformed into other expressions according to actual conditions in other implementations. For example, when the rated powers of the two motors differ greatly from each other, a certain weight needs to be set to make the settings more reasonable.

As shown in FIG. 1, a required torque $T_{out}$ may be obtained by looking up a MAP table based on a current output shaft speed $n_{out}$, accelerator pedal opening, and a vehicle speed, and the required power of the vehicle may also be obtained: $P_r = (n_{out} * T_{out}) / 9550$.

The rated power and peak power of the first motor are $P_{qr}$ and $P_{qp}$ respectively, and the rated power and peak power of the second motor are $P_{zr}$ and $P_{zp}$ respectively. The required power of the vehicle is greater than a sum of the rated powers of the two motors, that is, $P_r > P_{qr} + P_{zr}$. Generally, $P_r$ cannot exceed a sum of the peak powers.

In this method embodiment, the required power of the vehicle is greater than the sum of the rated powers of the two motors. Certainly, in another implementation, the required power of the vehicle may alternatively be less than the sum of the rated powers of the two motors. The motor can long operate under the rated power without being overheated. Once the output power exceeds the rated power, the temperature of the motor will rise rapidly. Therefore, when the required power of the vehicle is less than the sum of the rated powers of the two motors, the power allocation method in the prior art may be used, or the method that keeps the two motors below the rated powers may be used.

Vehicle embodiment:

The present invention provides a vehicle, including a vehicle body, a memory and a processor that are provided in the vehicle body, and a computer program stored in memory and running in the processor. When the processor runs the program, the power allocation method of a bi-electric system in the foregoing method embodiment is implemented, which is not repeated herein.

The power allocation method of a bi-electric system of the present invention can be applied to a vehicle composed of a dual motor and planetary gear set coupling mechanism. Parameters of the two motors may be the same or different. The present invention can solve the problem of power allocation of two motors with different parameters when a driver-required power exceeds rated powers of the dual motors, achieving more reasonable power allocation.

**Claims**

1. A power allocation method of a bi-electric system, comprising the following steps:

   (1) allocating an initially allocated power to a first motor and a second motor, wherein the initially allocated power of the first motor is $P_1$, and the initially allocated power of the second motor is $P_2$, calculating a heat quantity of the first motor and the second motor based on the initially allocated power of corresponding motors, collecting a heat exchange quantity of a cooling system of the first motor and the second motor in a current state, and the heat quantity of the first motor and the second motor respectively minus the heat exchange quantity of the cooling system of corresponding motors to obtain an absolute temperature rise heat quantity of corresponding motors;
   (2) obtaining a temperature rise rate of the first motor and the second motor based on the absolute temperature rise heat quantity of corresponding motors and corresponding motor characteristics; and
   (3) obtaining a current temperature of the first motor, $T_1$ and a current temperature of the second motor, $T_2$, and determining an output power of the first motor and an output power of the second motor according to the following two relationships:

   a first relationship: a temperature of the first motor at a next moment and a temperature of the second motor at the next moment are adjusted to be equal based on the current temperature of the first motor, $T_1$ and the current temperature of the second motor, $T_2$ in combination with a temperature rise rate of the first motor, $k_{dq}$, a temperature rise rate of the second motor, $k_{dz}$, a correction factor of the first motor, $\alpha_1$ and a correction factor of the second motor, $\alpha_2$,

$$T_1 + \alpha_1 \int_{t_1}^{t_2} k_{dq} dt = T_2 + \alpha_2 \int_{t_1}^{t_2} k_{dz} dt$$

where $t_1$ and $t_2$ represent sampling time; and

a second relationship: a sum of the output power of the first motor and the output power of the second motor is equal to a required power of a vehicle comprising the first motor and the second motor, $P_r$, wherein the output power of the first motor is the correction factor of the first motor, $\alpha_1$ multiplied by the initially allocated power of the first motor, $P_1$, and the output power of the second motor is the correction factor of the second motor, $\alpha_2$ multiplied by the initially allocated power of the second motor, $P_2$,

$$P_1 * \alpha_1 + P_2 * \alpha_2 = P_r.$$

2. The power allocation method of the bi-electric system according to claim 1, **characterized in that** a formula for calculating the heat exchange quantity $Q_e$ of the cooling system of the first motor and the second motor in the current state is:

$$Q_e = \left( Q_{q2} - Q_{q1} \right) * q_q * \rho * c$$

wherein $Q_{q1}$ is a temperature at a cooling water inlet of the motor, $Q_{q2}$ is a temperature at a cooling water outlet of the motor, $q_q$ is flux of a coolant flowing through the motor per unit sampling time, $\rho$ is density of the coolant, and $C$ is a specific heat capacity of the coolant.

3. The power allocation method of the bi-electric system according to claim 1, **characterized in that** the initially allocated power of the first motor is:

$$P_{qr} + \frac{\left( P_{qp} - P_{qr} \right) * \left( P_r - P_{qr} - P_{zr} \right)}{\left( P_{qp} + P_{zp} \right) - \left( P_{qr} + P_{zr} \right)}$$

the initially allocated power of the second motor is:

$$P_{zr} + \frac{\left( P_{zp} - P_{zr} \right) * \left( P_r - P_{qr} - P_{zr} \right)}{\left( P_{qp} + P_{zp} \right) - \left( P_{qr} + P_{zr} \right)}$$

wherein $P_{qr}$ is a rated power of the first motor, $P_{zr}$ is a rated power of the second motor, $P_{qp}$ is a peak power of the first motor, $P_{zp}$ is a peak power of the second motor, and $P_r$ is the required power of the vehicle.

4. The power allocation method of the bi-electric system according to claim 2, **characterized in that** to obtain a heat quantity of the first motor and the second motor, a current of the first motor and the second motor at this moment is inversely deduced from P=UI, then a heat quantity resulting from copper loss of the first motor and the second motor is deduced from Q=I²RT, and the heat quantity of the first motor and the second motor is inversely deduced from a proportion of the heat quantity resulting from copper loss to the heat quantity of corresponding motors.

5. The power allocation method of the bi-electric system according to claim 1, 2, 3, or 4, **characterized in that** the required power of the vehicle is greater than a sum of a rated power of the first motor and a rated power of the second motor.

6. A vehicle, comprising a vehicle body, a first motor, a second motor, a cooling system of the first motor and a cooling system of the second motor, means for obtaining a current temperature of the first motor, $T_1$, means for obtaining a current temperature of the second motor, $T_2$, a memory and a processor that are provided in the vehicle body, and a computer program stored in the memory and running in the processor, **characterized in that** when the processor runs the program, the following steps are implemented:

(1) allocating an initially allocated power to the first motor and the second motor, wherein the initially allocated power of the first motor is $P_1$, and the initially allocated power of the second motor is $P_2$, calculating a heat

quantity of the first motor and the second motor based on the initially allocated power of corresponding motors, collecting a heat exchange quantity of a cooling system of the first motor and the second motor in a current state, and the heat quantity of the first motor and the second motor respectively minus the heat exchange quantity of the cooling system of corresponding motors to obtain an absolute temperature rise heat quantity of corresponding motors;

(2) obtaining a temperature rise rate of the first motor and the second motor based on the absolute temperature rise heat quantity of corresponding motors and corresponding motor characteristics; and

(3) obtaining a current temperature of the first motor, $T_1$ and a current temperature of the second motor, $T_2$, and determining an output power of the first motor and an output power of the second motor according to the following two relationships:

a first relationship: a temperature of the first motor at a next moment and a temperature of the second motor at the next moment are adjusted to be equal based on the current temperature of the first motor, $T_1$ and the current temperature of the second motor, $T_2$ in combination with a temperature rise rate of the first motor, $k_{dq}$, a temperature rise rate of the second motor, $k_{dz}$, a correction factor of the first motor, $\alpha_1$ and a correction factor of the second motor, $\alpha_2$,

$$T_1 + \alpha_1 \int_{t_1}^{t_2} k_{dq} dt = T_2 + \alpha_2 \int_{t_1}^{t_2} k_{dz} dt$$

where $t_1$ and $t_2$ represent sampling time; and

a second relationship: a sum of the output power of the first motor and the output power of the second motor is equal to a required power of the vehicle, $P_r$, wherein the output power of the first motor is the correction factor of the first motor, $\alpha_1$ multiplied by the initially allocated power of the first motor, $P_1$, and the output power of the second motor is the correction factor of the second motor, $\alpha_2$ multiplied by the initially allocated power of the second motor, $P_2$,

$$P_1 * \alpha_1 + P_2 * \alpha_2 = P_r.$$

7. The vehicle according to claim 6, **characterized in that** a formula for calculating the heat exchange quantity $Q_e$ of the cooling system of the first motor and the second motor in the vehicle in the current state is:

$$Q_e = \left( Q_{q2} - Q_{q1} \right) * q_q * \rho * c$$

wherein $Q_{q1}$ is a temperature at a cooling water inlet of the motor, $Q_{q2}$ is a temperature at a cooling water outlet of the motor, $q_q$ is flux of a coolant flowing through the motor per unit sampling time, $\rho$ is density of the coolant, and $C$ is a specific heat capacity of the coolant.

8. The vehicle according to claim 6, **characterized in that** the initially allocated power of the first motor in the vehicle is:

$$P_{qr} + \frac{\left( P_{qp} - P_{qr} \right) * \left( P_r - P_{qr} - P_{zr} \right)}{\left( P_{qp} + P_{zp} \right) - \left( P_{qr} + P_{zr} \right)}$$

the initially allocated power of the second motor is:

$$P_{zr} + \frac{\left( P_{zp} - P_{zr} \right) * \left( P_r - P_{qr} - P_{zr} \right)}{\left( P_{qp} + P_{zp} \right) - \left( P_{qr} + P_{zr} \right)}$$

wherein $P_{qr}$ is a rated power of the first motor, $P_{zr}$ is a rated power of the second motor, $P_{qp}$ is a peak power of the first motor, $P_{zp}$ is a peak power of the second motor, and $P_r$ is the required power of the vehicle.

9. The vehicle according to claim 7, **characterized in that** to obtain a heat quantity of the first motor and the second motor in the vehicle, a current of the first motor and the second motor at this moment is inversely deduced from P=UI, then a heat quantity resulting from copper loss of the first motor and the second motor is deduced from Q=I²RT, and the heat quantity of the first motor and the second motor is inversely deduced from a proportion of the heat quantity resulting from copper loss to the heat quantity of corresponding motors.

10. The vehicle according to claim 6, 7, 8, or 9, **characterized in that** the required power of the vehicle is greater than a sum of a rated power of the first motor and a rated power of the second motor.

**Patentansprüche**

1. Leistungszuordnungsverfahren für ein bielektrisches System, umfassend die folgenden Schritte:

   (1) Zuordnen einer anfänglich zugeordneten Leistung zu einem ersten Motor und einem zweiten Motor, wobei die anfänglich zugeordnete Leistung des ersten Motors $P_1$ ist und die anfänglich zugeordnete Leistung des zweiten Motors $P_2$ ist, Berechnen einer Wärmemenge des ersten Motors und des zweiten Motors basierend auf der anfänglich zugeordneten Leistung der entsprechenden Motoren durch Erfassen einer Wärmeaustauschmenge eines Kühlsystems des ersten Motors und des zweiten Motors in einem aktuellen Zustand und der jeweiligen Wärmeaustauschmenge des ersten Motors und des zweiten Motors minus der Wärmeaustauschmenge des Kühlsystems der entsprechenden Motoren, um eine absolute Wärmemenge des Temperaturanstiegs der entsprechenden Motoren zu erhalten;
   (2) Erhalten einer Temperaturanstiegsrate des ersten Motors und des zweiten Motors basierend auf der absoluten Wärmemenge des Temperaturanstiegs der entsprechenden Motoren und den entsprechenden Motormerkmalen; und
   (3) Erhalten einer aktuellen Temperatur des ersten Motors $T_1$ und einer aktuellen Temperatur des zweiten Motors $T_2$ und Bestimmen einer Ausgangsleistung des ersten Motors und einer Ausgangsleistung des zweiten Motors gemäß den folgenden beiden Beziehungen:

   eine erste Beziehung: eine Temperatur des ersten Motors in einem nächsten Moment und eine Temperatur des zweiten Motors im nächsten Moment werden basierend auf der aktuellen Temperatur des ersten Motors $T_1$ und der aktuellen Temperatur des zweiten Motors $T_2$ in Kombination mit einer Temperaturanstiegsrate des ersten Motors $k_{dq}$, einer Temperaturanstiegsrate des zweiten Motors $k_{dz}$, einem Korrekturfaktor des ersten Motors $\alpha_1$ und einem Korrekturfaktor des zweiten Motors $\alpha_2$ so eingestellt, dass sie gleich sind,

   $$T_1 + \alpha_1 \int_{t_1}^{t_2} k_{dq} dt = T_2 + \alpha_2 \int_{t_1}^{t_2} k_{dz} dt$$

   wobei $t_1$ und $t_2$ die Abtastzeit darstellen; und
   eine zweite Beziehung: eine Summe der Ausgangsleistung des ersten Motors und der Ausgangsleistung des zweiten Motors ist gleich einer Sollleistung eines Fahrzeugs mit dem ersten und zweiten Motor $P_r$, wobei die Ausgangsleistung des ersten Motors der Korrekturfaktor des ersten Motors $\alpha_1$ multipliziert mit der anfänglich zugeordneten Leistung des ersten Motors $P_1$ ist und die Ausgangsleistung des zweiten Motors der Korrekturfaktor des zweiten Motors $\alpha_2$ multipliziert mit der anfänglich zugeordneten Leistung des zweiten Motors $P_2$ ist,

   $$P_1 * \alpha_1 + P_2 * \alpha_2 = P_r.$$

2. Leistungszuordnungsverfahren für ein bielektrisches System nach Anspruch 1, **dadurch gekennzeichnet, dass** eine Formel zum Berechnen der Wärmeaustauschmenge $Q_e$ des Kühlsystems des ersten Motors und des zweiten Motors im aktuellen Zustand wie folgt lautet:

$$Q_e = \left( Q_{q2} - Q_{q1} \right) * q_q * \rho * c$$

wobei $Q_{q1}$ eine Temperatur an einem Kühlwassereinlass des Motors ist, $Q_{q2}$ eine Temperatur an einem Kühlwasserauslass des Motors, $q_q$ ein Strom eines pro Einheitsabtastzeit durch den Motor strömenden Kältemittels, $\rho$ die Dichte des Kältemittels und c eine spezifische Wärmekapazität des Kältemittels.

3. Leistungszuordnungsverfahren für ein bielektrisches System nach Anspruch 1, **dadurch gekennzeichnet, dass** die anfänglich zugeordnete Leistung des ersten Motors wie folgt ist:

$$P_{qr} + \frac{\left(P_{qp} - P_{qr}\right) * \left(P_r - P_{qr} - P_{zr}\right)}{\left(P_{qp} + P_{zp}\right) - \left(P_{qr} + P_{zr}\right)}$$

die anfänglich zugeordnete Leistung des zweiten Motors wie folgt ist:

$$P_{zr} + \frac{\left(P_{zp} - P_{zr}\right) * \left(P_r - P_{qr} - P_{zr}\right)}{\left(P_{qp} + P_{zp}\right) - \left(P_{qr} + P_{zr}\right)}$$

wobei $P_{qr}$ eine Nennleistung des ersten Motors ist, $P_{zr}$ eine Nennleistung des zweiten Motors, $P_{qp}$ eine Spitzenleistung des ersten Motors, $P_{zp}$ eine Spitzenleistung des zweiten Motors und $P_r$ eine Sollleistung des Fahrzeugs.

4. Leistungszuordnungsverfahren für ein bielektrisches System nach Anspruch 2, **dadurch gekennzeichnet, dass** zum Erhalt einer Wärmemenge des ersten Motors und des zweiten Motors ein Strom des ersten Motors und des zweiten Motors in diesem Moment aus P=UI umgekehrt abgeleitet wird, dann die aus dem Kupferverlust des ersten Motors und des zweiten Motors resultierende Wärme aus $Q=I^2RT$ abgeleitet wird und die Wärmemenge des ersten Motors und des zweiten Motors aus einem Anteil der aus dem Kupferverlust resultierenden Wärme relativ zu der Wärmemenge der entsprechenden Motoren umgekehrt abgeleitet wird..

5. Leistungszuordnungsverfahren für ein bielektrisches System nach Anspruch 1, 2, 3 oder 4, **dadurch gekennzeichnet, dass** die Sollleistung des Fahrzeugs größer ist als eine Summe einer Nennleistung des ersten Motors und einer Nennleistung des zweiten Motors.

6. Fahrzeug, umfassend eine Fahrzeugkarosserie, einen ersten Motor, einen zweiten Motor, ein Kühlsystem des ersten Motors und ein Kühlsystem des zweiten Motors, Mittel zum Erhalten einer aktuellen Temperatur des ersten Motors $T_1$, Mittel zum Erhalten einer aktuellen Temperatur des zweiten Motors $T_2$,

einen Speicher und einen Prozessor, die in der Fahrzeugkarosserie bereitgestellt sind, sowie ein in dem Speicher gespeichertes Computerprogramm, das auf dem Prozessor läuft, **dadurch gekennzeichnet, dass**, wenn der Prozessor das Programm ausführt, die folgenden Schritte implementiert werden:

(1) Zuordnen einer anfänglich zugeordneten Leistung zum ersten Motor und zum zweiten Motor, wobei die anfänglich zugeordnete Leistung des ersten Motors $P_1$ ist und die anfänglich zugeordnete Leistung des zweiten Motors $P_2$ ist, Berechnen einer Wärmemenge des ersten Motors und des zweiten Motors basierend auf der anfänglich zugeordneten Leistung der entsprechenden Motoren durch Erfassen einer Wärmeaustauschmenge eines Kühlsystems des ersten Motors und des zweiten Motors in einem aktuellen Zustand und der jeweiligen Wärmeaustauschmenge des ersten Motors und des zweiten Motors minus der Wärmeaustauschmenge des Kühlsystems der entsprechenden Motoren, um eine absolute Wärmemenge des Temperaturanstiegs der entsprechenden Motoren zu erhalten;
(2) Erhalten einer Temperaturanstiegsrate des ersten Motors und des zweiten Motors basierend auf der Wärmemenge des absoluten Temperaturanstiegs der entsprechenden Motoren und den entsprechenden Motormerkmalen; und
(3) Erhalten einer aktuellen Temperatur des ersten Motors $T_1$ und einer aktuellen Temperatur des zweiten Motors $T_2$ und Bestimmen einer Ausgangsleistung des ersten Motors und einer Ausgangsleistung des zweiten Motors gemäß den folgenden beiden Beziehungen:

eine erste Beziehung: eine Temperatur des ersten Motors in einem nächsten Moment und eine Temperatur des zweiten Motors im nächsten Moment werden basierend auf der aktuellen Temperatur des ersten Motors $T_1$ und der aktuellen Temperatur des zweiten Motors $T_2$ in Kombination mit einer Temperaturanstiegsrate des ersten Motors $k_{dq}$, einer Temperaturanstiegsrate des zweiten Motors $k_{dz}$, einem Korrekturfaktor des ersten Motors $\alpha_1$ und einem Korrekturfaktor des zweiten Motors $\alpha_2$ so eingestellt, dass sie gleich sind,

$$T_1 + \alpha_1 \int_{t_1}^{t_2} k_{dq}dt = T_2 + \alpha_2 \int_{t_1}^{t_2} k_{dz}dt$$

wobei $t_1$ und $t_2$ die Abtastzeit darstellen; und
eine zweite Beziehung: eine Summe der Ausgangsleistung des ersten Motors und der Ausgangsleistung des zweiten Motors ist gleich einer Sollleistung des Fahrzeugs $P_r$, wobei die Ausgangsleistung des ersten Motors der Korrekturfaktor des ersten Motors $\alpha_1$ multipliziert mit der anfänglich zugeordneten Leistung des ersten Motors $P_1$ ist und die Ausgangsleistung des zweiten Motors der Korrekturfaktor des zweiten Motors $\alpha_2$ multipliziert mit der anfänglich zugeordneten Leistung des zweiten Motors $P_2$ ist,

$$P_1 * \alpha_1 + P_2 * \alpha_2 = P_r.$$

7. Fahrzeug nach Anspruch 6, **dadurch gekennzeichnet, dass** eine Formel zur Berechnung der Wärmeaustauschmenge $Q_e$ des Kühlsystems des ersten Motors und des zweiten Motors im aktuelle Zustand wie folgt lautet:

$$Q_e = \left( Q_{q2} - Q_{q1} \right) * q_q * \rho * c$$

wobei $Q_{q1}$ eine Temperatur an einem Kühlwasserleinlass des Motors ist, $Q_{q2}$ eine Temperatur an einem Kühlwasserauslass des Motors, $q_q$ ein Strom eines pro Einheitsabtastzeit durch den Motor strömenden Kältemittels, $\rho$ die Dichte des Kältemittels und c eine spezifische Wärmekapazität des Kältemittels.

8. Fahrzeug nach Anspruch 6, **dadurch gekennzeichnet, dass** die anfänglich zugeordnete Leistung des ersten Motors in dem Fahrzeug wie folgt ist:

$$P_{qr} + \frac{\left( P_{qp} - P_{qr} \right) * \left( P_r - P_{qr} - P_{zr} \right)}{\left( P_{qp} + P_{zp} \right) - \left( P_{qr} + P_{zr} \right)}$$

die anfänglich zugeordnete Leistung des zweiten Motors wie folgt ist:

$$P_{zr} + \frac{\left( P_{zp} - P_{zr} \right) * \left( P_r - P_{qr} - P_{zr} \right)}{\left( P_{qp} + P_{zp} \right) - \left( P_{qr} + P_{zr} \right)}$$

wobei $P_{qr}$ eine Nennleistung des ersten Motors ist, $P_{zr}$ eine Nennleistung des zweiten Motors, $P_{qp}$ eine Spitzenleistung des ersten Motors, $P_{zp}$ eine Spitzenleistung des zweiten Motors und $P_r$ eine Sollleistung des Fahrzeugs.

9. Fahrzeug nach Anspruch 7, **dadurch gekennzeichnet, dass** zum Erhalt einer Wärmemenge des ersten Motors und des zweiten Motors in dem Fahrzeug ein Strom des ersten Motors und des zweiten Motors in diesem Moment aus P=UI umgekehrt abgeleitet wird, dann die aus dem Kupferverlust des ersten Motors und des zweiten Motors resultierende Wärme aus Q=I²RT abgeleitet wird und die Wärmemenge des Motors aus einem Anteil der aus dem Kupferverlust resultierenden Wärme relativ zu der Wärmemenge der entsprechenden Motoren umgekehrt abgeleitet wird.

10. Fahrzeug nach Anspruch 6, 7, 8 oder 9, **dadurch gekennzeichnet, dass** die Sollleistung des Fahrzeugs größer ist als eine Summe einer Nennleistung des ersten Motors und einer Nennleistung des zweiten Motors.

**Revendications**

1. Procédé d'allocation de puissance d'un système bi-électrique, comprenant les étapes suivantes :

   (1) l'allocation d'une puissance initialement allouée à un premier moteur et à un second moteur, la puissance initialement allouée du premier moteur étant $P_1$, et la puissance initialement allouée du second moteur étant $P_2$, le calcul d'une quantité de chaleur du premier moteur et du second moteur sur la base de la puissance initialement allouée de moteurs correspondants, la collecte d'une quantité d'échange de chaleur d'un système de refroidissement du premier moteur et du second moteur dans un état actuel, et de la quantité de chaleur du premier moteur et du second moteur respectivement moins la quantité d'échange de chaleur du système de refroidissement de moteurs correspondants pour obtenir une quantité de chaleur d'élévation de la température absolue de moteurs correspondants ;
   (2) l'obtention d'une vitesse d'élévation de la température du premier moteur et du second moteur sur la base de la quantité de chaleur d'élévation de la température absolue de moteurs correspondants et de caractéristiques de moteurs correspondants ; et
   (3) l'obtention d'une température actuelle du premier moteur, $T_1$, et d'une température actuelle du second moteur, $T_2$, et la détermination d'une puissance de sortie du premier moteur et d'une puissance de sortie du second moteur en fonction des deux relations suivantes :

   une première relation : une température du premier moteur à un moment suivant et une température du second moteur à un moment suivant sont ajustées pour être égales sur la base de la température actuelle du premier moteur, $T_1$ et de la température actuelle du second moteur, $T_2$ en combinaison avec une vitesse d'élévation de la température du premier moteur, $k_{dq}$, une vitesse d'élévation de la température du second moteur, $k_{dz}$, un facteur de correction du premier moteur, $\alpha_1$ et un facteur de correction du second moteur, $\alpha_2$,

$$T_1 + \alpha_1 \int_{t_1}^{t_2} k_{dq}\,dt = T_2 + \alpha_2 \int_{t_1}^{t_2} k_{dz}\,dt$$

   où $t_1$ et $t_2$ représentent le temps d'échantillonnage ; et
   une seconde relation : une somme de la puissance de sortie du premier moteur et de la puissance de sortie du second moteur est égale à une puissance requise d'un véhicule comprenant le premier moteur et le second moteur, $P_r$, la puissance de sortie du premier moteur étant le facteur de correction du premier moteur, $\alpha_1$ multiplié par la puissance initialement allouée du premier moteur, $P_1$, et la puissance de sortie du second moteur étant le facteur de correction du second moteur, $\alpha_2$ multiplié par la puissance initialement allouée du second moteur, $P_2$,

$$P_1 * \alpha_1 + P_2 * \alpha_2 = P_r.$$

2. Procédé d'allocation de puissance du système bi-électrique selon la revendication 1, **caractérisé en ce qu'**une formule pour calculer la quantité d'échange de chaleur $Q_e$ du système de refroidissement du premier moteur et du second moteur dans l'état actuel est :

$$Q_e = \left(Q_{q2} - Q_{q1}\right) * q_q * \rho * c$$

   où $Q_{q1}$ est une température à une entrée d'eau de refroidissement du moteur, $Q_{q2}$ est une température à une sortie d'eau de refroidissement du moteur, $q_q$ est le flux d'un liquide de refroidissement traversant le moteur par unité de temps d'échantillonnage, $\rho$ est la densité du liquide de refroidissement, et c est une capacité thermique spécifique du liquide de refroidissement.

3. Procédé d'allocation de puissance du système bi-électrique selon la revendication 1, **caractérisé en ce que** la puissance initialement allouée du premier moteur est :

$$P_{qr} \; + \; \frac{\left(P_{qp} \; - \; P_{qr}\right) \; * \; \left(P_r - P_{qr} \; - \; P_{zr}\right)}{\left(P_{qp} \; + \; P_{zp}\right) \; - \; \left(P_{qr} \; + \; P_{zr}\right)}$$

la puissance initialement allouée du second moteur est :

$$P_{zr} \; + \; \frac{\left(P_{zp} \; - \; P_{zr}\right) \; * \; \left(P_r - P_{qr} \; - \; P_{zr}\right)}{\left(P_{qp} \; + \; P_{zp}\right) \; - \; \left(P_{qr} \; + \; P_{zr}\right)}$$

où $P_{qr}$ est une puissance nominale du premier moteur, $P_{zr}$ est une puissance nominale du second moteur, $P_{qp}$ est une puissance de crête du premier moteur, $P_{zp}$ est une puissance de crête du second moteur, et $P_r$ est une puissance requise du véhicule.

**4.** Procédé d'allocation de puissance du système bi-électrique selon la revendication 2, **caractérisé en ce que** pour obtenir une quantité de chaleur du premier moteur et du second moteur, un courant du premier moteur et du second moteur à ce moment est inversement déduit de P=UI, puis une quantité de chaleur résultant de la perte de cuivre du premier moteur et du second moteur est déduite de Q=I²RT, et la quantité de chaleur du premier moteur et du second moteur est inversement déduite d'une proportion de la quantité de chaleur résultant de la perte de cuivre par rapport à la quantité de chaleur de moteurs correspondants.

**5.** Procédé d'allocation de puissance du système bi-électrique selon la revendication 1, 2, 3, ou 4, **caractérisé en ce que** la puissance requise du véhicule est supérieure à une somme d'une puissance nominale du premier moteur et d'une puissance nominale du second moteur.

**6.** Véhicule comprenant une carrosserie, un premier moteur, un second moteur, un système de refroidissement du premier moteur et un système de refroidissement du second moteur, des moyens pour obtenir une température actuelle du premier moteur, $T_1$, des moyens pour obtenir une température actuelle du second moteur, une mémoire et un processeur qui sont fournis dans la carrosserie du véhicule, et un programme d'ordinateur stocké dans la mémoire et exécuté dans le processeur, **caractérisé en ce que** lorsque le processeur exécute le programme, les étapes suivantes sont mises en oeuvre :

(1) l'allocation d'une puissance initialement allouée au premier moteur et au second moteur, la puissance initialement allouée du premier moteur étant $P_1$, et la puissance initialement allouée du second moteur étant $P_2$, le calcul d'une quantité de chaleur du premier moteur et du second moteur sur la base de la puissance initialement allouée de moteurs correspondants, la collecte d'une quantité d'échange de chaleur d'un système de refroidissement du premier moteur et du second moteur dans un état actuel, et de la quantité de chaleur du premier moteur et du second moteur respectivement moins la quantité d'échange de chaleur du système de refroidissement de moteurs correspondants pour obtenir une quantité de chaleur d'élévation de la température absolue de moteurs correspondants ;
(2) l'obtention d'une vitesse d'élévation de la température du premier moteur et du second moteur sur la base de la quantité de chaleur d'élévation de la température absolue de moteurs correspondants et de caractéristiques de moteurs correspondants ; et
(3) l'obtention d'une température actuelle du premier moteur, $T_1$, et d'une température actuelle du second moteur, $T_2$, et la détermination d'une puissance de sortie du premier moteur et d'une puissance de sortie du second moteur en fonction des deux relations suivantes :

une première relation : une température du premier moteur à un moment suivant et une température du second moteur à un moment suivant sont ajustées pour être égales sur la base de la température actuelle du premier moteur, $T_1$ et de la température actuelle du second moteur, $T_2$ en combinaison avec une vitesse d'élévation de la température du premier moteur, $k_{dq}$, une vitesse d'élévation de la température du second moteur, $k_{dz}$, un facteur de correction du premier moteur, $\alpha_1$ et un facteur de correction du second moteur, $\alpha_2$,

$$T_1 + \alpha_1 \int_{t_1}^{t_2} k_{dq}dt = T_2 + \alpha_2 \int_{t_1}^{t_2} k_{dz}dt$$

où $t_1$ et $t_2$ représentent le temps d'échantillonnage ; et
une seconde relation : une somme de la puissance de sortie du premier moteur et de la puissance de sortie du second moteur est égale à la puissance requise du véhicule, $P_r$, la puissance de sortie du premier moteur étant le facteur de correction du premier moteur, $\alpha_1$, multiplié par la puissance initialement allouée du premier moteur, $P_1$, et la puissance de sortie du second moteur étant le facteur de correction du second moteur, $\alpha_2$, multiplié par la puissance initialement allouée du second moteur, $P_2$,

$$P_1 * \alpha_1 + P_2 * \alpha_2 = P_r.$$

7.  Véhicule selon la revendication 6, **caractérisé en ce qu'**une formule pour calculer la quantité d'échange de chaleur $Q_e$ du système de refroidissement du premier moteur et du second moteur dans le véhicule à l'état actuel est

$$Q_e = \left(Q_{q2} - Q_{q1}\right) * q_q * \rho * c$$

où $Q_{q1}$ est une température à une entrée d'eau de refroidissement du moteur, $Q_{q2}$ est une température à une sortie d'eau de refroidissement du moteur, $q_q$ est le flux d'un liquide de refroidissement traversant le moteur par unité de temps d'échantillonnage, $\rho$ est la densité du liquide de refroidissement, et c est la capacité thermique spécifique du liquide de refroidissement.

8.  Véhicule selon la revendication 6, **caractérisé en ce que** la puissance initialement allouée du premier moteur dans le véhicule est :

$$P_{qr} + \frac{\left(P_{qp} - P_{qr}\right) * \left(P_r - P_{qr} - P_{zr}\right)}{\left(P_{qp} + P_{zp}\right) - \left(P_{qr} + P_{zr}\right)}$$

la puissance initialement allouée du second moteur est :

$$P_{zr} + \frac{\left(P_{zp} - P_{zr}\right) * \left(P_r - P_{qr} - P_{zr}\right)}{\left(P_{qp} + P_{zp}\right) - \left(P_{qr} + P_{zr}\right)}$$

où $P_{qr}$ est une puissance nominale du premier moteur, $P_{zr}$ est une puissance nominale du second moteur, $P_{qp}$ est une puissance de crête du premier moteur, $P_{zp}$ est une puissance de crête du second moteur, et $P_r$ est une puissance requise du véhicule.

9.  Véhicule selon la revendication 7, **caractérisé en ce que** pour obtenir une quantité de chaleur du premier moteur et du second moteur dans le véhicule, un courant du premier moteur et du second moteur à ce moment est inversement déduit de P=UI, puis une quantité de chaleur résultant de la perte de cuivre du premier moteur et du second moteur est déduite de Q=I²RT, et la quantité de chaleur du premier moteur et du second moteur est inversement déduite d'une proportion de la quantité de chaleur résultant de la perte de cuivre par rapport à la quantité de chaleur de moteurs correspondants.

10. Véhicule selon la revendication 6, 7, 8 ou 9, **caractérisé en ce que** la puissance requise du véhicule est supérieure à une somme d'une puissance nominale du premier moteur et d'une puissance nominale du second moteur.

```
┌──────────────┐        ┌──────────────┐        ┌──────────────────┐
│    Motor     │───────▶│ Initialization│◀──────│ Cooling System   │
│  Condition   │        │              │        │    Condition     │
└──────────────┘        └──────────────┘        └──────────────────┘
                               │
                               ▼
┌──────────────────┐    ┌──────────────┐        ┌──────────────────┐
│ Accelerator Pedal│    │   Required   │        │     Required     │
│  Opening and     │───▶│    Power     │◀───────│      Power       │
│  Vehicle Speed   │    │  Estimation  │        │    Estimation    │
└──────────────────┘    └──────────────┘        └──────────────────┘
                               │
                               ▼
              ┌────────────────────────────────┐
              │  $P_{qr}+P_{zr}<P_r<P_{qp}+P_{zp}$  │
              └────────────────────────────────┘
                               │
                               ▼
                        ┌──────────────┐
                        │  Initially   │
                        │  Allocated   │
                        │    Power     │
                        └──────────────┘
                               │
                               ▼
              ┌────────────────────────────────┐
              │   Weighted Correction          │
              │  of Temperature Rise           │
              │          Rate                  │
              └────────────────────────────────┘
```

FIG. 1

**EP 3 978 301 B1**

**REFERENCES CITED IN THE DESCRIPTION**

**Patent documents cited in the description**

- CN 104859486 B
- EP 2080660 A1
- EP 2444273 A2
- CN 108569168 A
- US 2018162379 A1